# EUROPEAN PATENT SPECIFICATION

(11) **EP 0 360 352 B1**
(45) Date of publication and mention of the grant of the patent: **13.12.1995**
(21) Application number: 89202364.9
(22) Date of filing: 19.09.1989
(51) Int. Cl.: G06F 3/16, G06F 3/023

(54) **Work station for a computer system comprising a display element, an input system, and an audio communicaton system, and computer system comprising such work stations**
Arbeitsstation für ein Rechnersystem mit einem Abbildungselement, einem Eingabesystem und einem Audiokommunikationssystem sowie Rechnersystem mit derartigen Arbeitsstationen
Station de travail pour un système informatique muni d'un élément d'affichage, d'un système d'entrée et d'un système de communication audio ainsi que système informatique comportant de telles stations de travail

(30) Priority: 23.09.1988 NL 8802350
(43) Date of publication of application: 28.03.1990
(73) Proprietor: Philips Electronics N.V., 5621 BA Eindhoven (NL)
(72) Inventor: Van Nes, Floris Leonard, NL-5656 AA Eindhoven (NL); Douma, Jan, NL-5656 AA Eindhoven (NL); Bouma, Herman, NL-5656 AA Eindhoven (NL)
(74) Representative: Strijland, Wilfred

(56) References cited:
- GB-A- 2 065 341
- NL-A- 8 401 863
- US-A- 4 704 703
- ANGEWANDTE INFORMATIK, vol. 29, no. 1, January 1987, pages 23-29, Friedr. Vieweg & Sohn Verlagsgesellschaft mbH; J. BAUER et al.: "Propositions on help-systems"
- RESEARCH DISCLOSURE, no. 263, March 1986, page 115, abstract no. 26302, "Audio help for computer users"
- IBM TECHNICAL DISCLOSURE BULLETIN, vol. 13, no. 7, December 1970, pages 1944-1945, New York, US; G.L. CLAPPER: "Spoken word recognizer"

## Description

### BACKGROUND OF THE INVENTION

The invention relates to a work station for use in a computer system for executing a computer program while sustaining a dialog between a user person and the program by means of a data display element for outputting signals from said executing, and a mechanical input element for inputting of data signals and control signals for said executing. Work stations of this kind are generally known. The computer system may locally form part of the work station, so that it constitutes, for example a personal computer. The processing capacity of the compute system itself is arbitrary, it may be very high but may also be at the level of a scientific calculator. The computer system may be arranged at a remote site and be connected to one or more work stations via a communication system or network. The display element is capable of displaying an amount of data in the form of respective lines of text, for example in that information fetched from a memory is translated into a readable character format by means of a character generator. The number of lines may amount to one or two, but may also be organized as a page comprising, for example 16, 24, 32 or more lines. The text may be accompanied by, or even be fully replaced for a given page, by graphic information. The technology of the display element may vary: CRT, LCD or otherwise; in given circumstances the display mechanism may be provided exclusively as a generator for a hard copy. The display may be, for example decimal, hexadecimal, alphanumerical or ideographic. The input system may be a conventional keyboard or a special keyboard (alphanumerical, hexadecimal or otherwise). The actuation of a key can be signalled by detection of the motion of a key or of a finger of the operator. The system may also be based on graphic input, on a so-called soft keyboard, on a mouse, on a joystick, or the like. During use of the work station a program is called and data is made available for the execution. This data can be read from a memory, for example from a data file. On the other hand, the data can also be input by a user, for example via the keyboard, such as in the case text writing or the updating of a data file.

The work station may comprise further components, for example a printer, a local memory (for example a magnetic disc or CD-ROM), a local processor in addition to the central computer, data communication equipment for connection to an environment and so on. However, the invention does not relate to such additional equipment.

The computer may be suitable for general purposes. It may also be a special-purpose version, for example for a text processing system, for a television game, for educational purposes or for controlling an industrial installation. In the latter case respective keys may also be situated at a large distance from one another, for example as much as a few meters apart. Furthermore, in addition to the relevant work station and/or other work stations the computer system may also comprise stations of a different kind, for example a fast printer, back-up memory, sensors, actuators, input/output stations and so on.

Previous generations of computers operated batch-wise: input of data and user control signals was separated in time, and often also in location, from the execution of the program. Contemporary computers usually operate interactively: the difference in time between input and execution and the subsequent presentation of the results usually does not exceed a few seconds. The use of such a computer is characterized by a dialog structure. In many cases the operator commits errors due to carelessness. Customarily, errors occurring due to such carelessnesses committed in the past are indicated on the display screen (for example, by way of a flashing message) or by means of an acoustic signal such as a ringing or beeping sound.

### SUMMARY OF THE INVENTION.

Among other things it is an object of the invention to anticipate such errors and signal the risk to a user, and to facilitate the use of the system for the operator so that fewer incorrect or undesirable control operations and/or incomplete data specifications occur, while ensuring that user control signals which are nonsensical within the program so that they cannot be executed lead to an error message or a question from the system, the effectiveness of the supporting dialog being enhanced by introducing an additional communication means at the level of the man-machine interface. According to a first aspect of the invention, the work station comprises detection means fed by said input element for therefrom detecting an impending exception situation from a set of exception situations, which situation is conditional to a particular further said inputting, and an assistance mechanism fed by said detection means for thereupon presenting assistance information particular to said exception situation and said particular further inputting, said assistance mechanism feeding a speech communication channel for presenting said assistance information in the form of speech as a measure against screen pollution.

Several aspects of the invention have been described in ANGEWANDTE INFORMATIK, Vol. 29, No. 1, January 1987, pp. 23-29, Friedr. Vieweg & Sohn GmbH, J. Bauer et al., Propositions on Help Systems, as follows: the user gets advice for the actual work (page 25, line 27R); and gets hints on actions with serious consequences (page 24, line 13L). However, Bauer does not suggest speech. The broad field where Bauer would use active help precludes the usage of speech, because audio pollution is an even greater danger than video pollution, due to the essential parallelism of the human vision channel.

Exception situations are situations in which it is to be expected that future inputs by the user (or the omission of such inputs) will impede correct execution of the program or will lead to the execution of an undesirable program (part). The foregoing may occur in the case of incorrect user control signals or incorrect specification of data. The assistance information explains the further input and hence is formulated as a check question or as supplementary information: a proposal is formulated therein or an instruction or directive. Given control signals have a substantial effect on the information present: they destroy, for example, a data file (delete file), have the file printed by a printer, or control an (expensive) despatch via a network. Therefore, in accordance with the invention in practice they must be confirmed by the operator after calling. The appropriate request can be made on a display screen, but such a request may worsen the textual structure already present thereon, i.e. so-called screen pollution. Therefore, the invention by no means relates to the parallel-wise presentation of a series of possibilities in a menu or the like. Additional display output is often found to be unclear for inexperienced users. Explaining a control signal by speech output for special cases has an accelerating effect and makes it easier for the user. According to the above aspect, for signalling the effect, use is made of a speech output channel which may form part of a more extensive audio communication system. Signalling can be expressed in various ways, for example:
- actuation of key # # effects the deletion -
- do you wish to delete the file <name> indeed ? then actuate key # # - etc.

The explanatory assistance information can also be given for data. This may concern very specific data without which execution of a program does not make sense. It may also concern data not specified or not adequately specified in a previous execution of a program (part). Prior to a repeat to be executed, it is announced by speech that the relevant data must be (further) specified. Finally it may concern data which has not been specified by the operator, while a given delay incurred demonstrates that the operator is aware of the existence of some omission but does not know how to remedy this omission.

### DIFFERENCE BETWEEN DATA AND USER CONTROL INFORMATION.

In order to start the execution of a program, it must generally be called. This is usually realised by inputting user control information via the keyboard. The same holds good for deactivation of the program, for calling or for terminating a sub-program within a program. There also exists a variety of other user control operations which can be realised via the keyboard. The difference between content of data in the work station and user control signals is defined as follows. User control signals are selected from a predetermined finite set of elements and influence the execution of a part of the program per se and/or with respect to another part in as far as it can be observed by a user. They generally activate or de-activate the execution of (a part of) the program. The effect usually appears from the way in which the data is available to the environment. Data signals can in principle be selected from an unlimited set of elements and influence the result of the execution of a part of the program, but not the execution which is visible outside the relevant part. An important category of user control signals is in principle capable of modifying the function, outside the program, of data available within the program, for example in that the data becomes available outside the program (for example, for another program), are erased (will never be available again), despatched, printed, compressed, displayed, encrypted, stored in back-up memory and so on. Therefore, control in this sense does not concern the calling of sub-routines, the cyclical activation of processes in a multi-process environment, micro-code, jump and branch commands and the like, because these processes take place entirely within the execution of the program and can have an effect towards the environment only subject to the condition of a user control signal as defined above.

The invention is based inter alia on the important insight that, while in human-to-human dialog acknowledge and check information generated by the participants almost always refers to the past (examples: can you understand me? I presume that you, etc.) and that also in man-computer dialogs the check and acknowledge information generated by the computer still does so, the explanatory assistance information in accordance with the invention anticipates on a further mechanical actuation possibly taking place in the future.

### FURTHER ASPECTS OF THE INVENTION.

A problem relating to the foregoing is that inexperienced users often have only a limited knowledge of the program functions. This holds good for the above consequences of executing such a program function after a user control signal (loss of information, expenditures or otherwise) as well as for the entire range of possible functions. Usually only a small part of all possibilities is really known. This may concern:
- the name of the function
- the effect of the function
- the name of a file.

In order to present the structure of the possible operations more clearly to an inexperienced user, according to a second aspect of the invention the work station comprises a speech communication channel for receiving, in the form of speech, a user control signal for a program function and for displaying, in response to the recognition of the user control signal, qualification information of said program function on the display element prior to the activation of this program function in response to the reception of activation information to be received from an operator subsequent to said user control signal. The qualification information, for example the name of the program function or of the file, is displayed after recognition of the calling information. Such a recognition may be unambiguous; a second possibility consists in that the speech recognition does not function properly and that the computer makes an ambiguous interpretation. In such an ambiguous case the qualification information of both interpretations is displayed or reproduced in speech. A third possibility consists in that an "erroneous" program function or erroneous file is called, the computer detecting that the call is erroneous. It may occur that in a given situation the computer can distinguish between correct functions/files and incorrect functions and files. When an incorrect function/file is called, the qualification information thereof is displayed, possibly together with a warning. Preferably, the qualification information is displayed together with the further operations required for execution, for example key actuations.

In the case of speech output, according to a further aspect of the invention a respective, different voice is available for at least two respective effect signalisations. Given user control signals can thus be immediately recognised and distinguished from other user control signals and/or receive special attention. The respective voices can differ in various ways: male versus female, high pitch versus low pitch, interrogative versus affirmative, friendly versus curt.

Further attractive aspects of the invention are disclosed in the dependent Claims.

### BRIEF DESCRIPTION OF THE FIGURES.

The invention will be described in detail hereinafter with reference to some Figures.
Fig. 1 shows a block diagram of a computer system in accordance with the invention;
Fig. 2 shows a more detailed block diagram of the work station shown in Fig. 1;
Figs. 3-6 show some flowcharts of operations taking place within a computer system/work station in accordance with the invention.

### BRIEF DESCRIPTION OF AN EMBODIMENT.

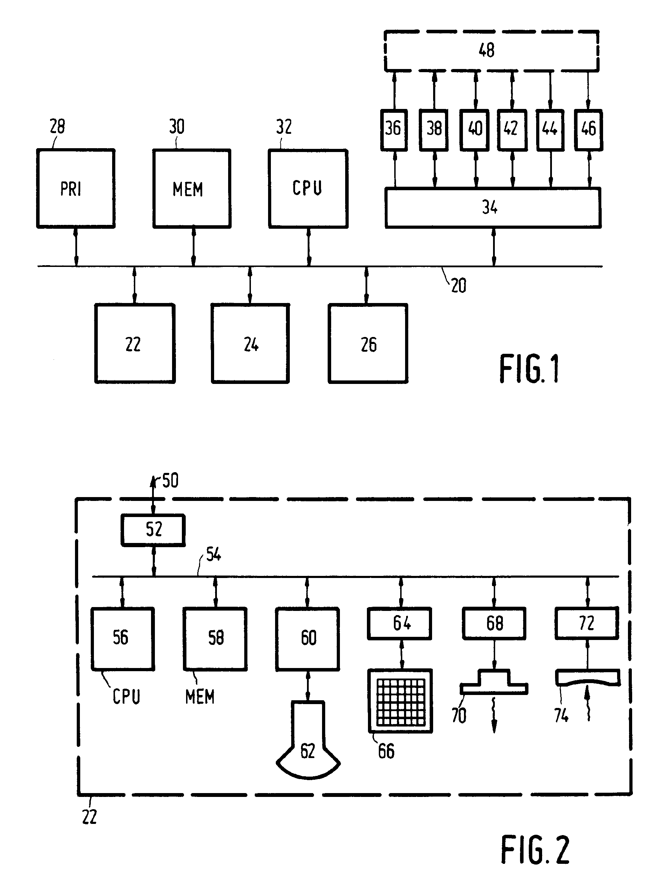

Fig. 1 shows a block diagram of a computer system in accordance with the invention. It comprises are three work stations 22, 24, 26. Also shown are a central data processor 32, a back-up memory 30, a fast printer 28 and an input/output station 34 for further equipment. All stations are bidirectionally connected to a bus 20. A block 48 symbolises an industrial process, for example a chemical reactor. To this block there are connected sensors 44, 46, actuators 36, 38 and elements 40, 42 which bidirectionally communicate with the industrial process, for example as a feed-back control element. The elements 36, ... 46 are connected to a control element 34 which comprises, for example suitable DA/AD converters and an interface to the bus 20. The computer system is often used in an office or personal environment and in such a case an industrial process is not involved. For the sake of simplicity, the sub-systems of Fig. 1, each of which may have a conventional construction, will not be elaborated herein. This also holds good for the bus protocols on the bus 20.

Fig. 2 shows a detailed block diagram of a work station (22, 24, 26) of Fig. 1 which is functionally bounded by the broken line 22. Element 52 is an interface element to the bus 20 whereto it is connected via line 50. There is provided an internal bus 54 whereto all local sub-systems to be described hereinafter are connected. Such a sub-system is a local data processor 56, for example a microprocessor with an associated foreground memory, for example a cache. Block 58 is a memory which operates as a foregound memory vis-à-vis the memory 30. Block 60 represents a control unit for a display element 62. This control element may comprise an interface element to the bus 54, a page memory, address counters and associated control means, a conversion to control for element 62, and a character generator. Element 64 is a control element for keyboard 66. Element 68 is a control element for loudspeaker 70. Element 72 is a control and processing element for microphone 74. The latter four elements together constitute a bidirectionally operating speech communication channel. This channel may also operate unidirectionally. In that case either only the elements 68/70 or only the elements 72/74 are present. Element 72 comprises a speech recognition device. This device is capable of recognising speech produced by an operator for conversion into character codes. The character codes can be output as representative words in a human language, for example English. They can alternatively be converted directly into characters having significance at the level of the program. In that case a group of one or more characters can represent a data element or an instruction in a programming language used (for example, source code, assembler language, machine code), a signal which acts as only a confirmation/negation, a specially defined code, or a data element (binary, hexadecimal, ASCII or the like). The latter conversion, however, can also be performed in the computer 56 or even in computer 32. Element 68 comprises a speech output element for which the statement given for the element 72 is reversed. The signals generated by the program are converted therein into a speech representation which is understandable for an operator. In given cases non-speech signals such as a ringing or whistling sound can be used in addition to or instead of speech signals. The elements 68-74 are known per se, so that they will not be elaborated herein. The bus protocol on the bus 54 is also irrelevant for the invention.

The work station can be made suitable for specific purposes by means of hardware and/or software. For example, it may be designed as a game computer or as a teaching computer for educational purposes.

### DESCRIPTION OF SOME IMPLEMENTATIONS OF THE INVENTION.

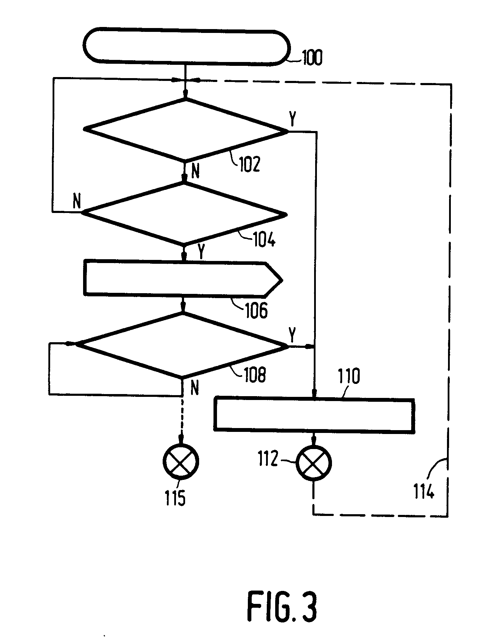

Four implementations of the use of the invention will be described hereinafter. A first example of the work station comprises a speech output channel. Assume that an inexperienced user of a given computer program omits the (sufficiently accurate) specification of given variables upon initialisation. Consequently, the program cannot be executed. This is detected by the operating system of the computer, after which a male voice signals this omission to the user. When the first mechanical actuation concerns a provisional activation of a user control operation to be definitively activated by a further mechanical actuation (for example, "erase file"), the effect of the further actuation yet to be performed is announced to the user, for example, by a male voice of a different pitch. The operating system may be entirely localised in the work station or in the central computer. Alternatively, the detection is realised by a so-called monitor program. In the time reserved for the execution of the relevant program, or in the relevant time slot when a multiprocess environment is concerned, this program signals that, after a given point in the execution has been reached, no operation has taken place in a given period of time, for example 5 seconds. The flowchart is shown in Fig. 3. In block 100 preliminary operations are performed, for example the calling of the program and a partial specification of the variables, but in this example not yet the necessary variables V1, V3. Consequently, the system awaits the specification of these variables V1, V3. The blocks 102, 104 then form a waiting loop. If no key is actuated (102N), it is detected whether 5 seconds have already expired after the last user operation. If this is so (104Y), in block 106 the following message is output in a male voice:
"You have not yet specified variables (V1 and V3)". Block 108 corresponds to block 102. When a key is actuated, the relevant information is processed in block 110. If the specification is still inadequate, the system returns to the block 102 via line 114, so that a new waiting loop is started. In given circumstances the text is then adapted in block 106 (for example, "V1" instead of "V1 and V3"). When the specification is adequate, indication 112 forms the output of the program module. Therein the actual program function is executed. This may lead to termination of the operations because a result is obtained and possibly another program module is activated on the basis thereof. Alternatively, after some time the system may return to block 102 as yet. The mechanical actuation by a key can be replaced by other actions, for example by the specification of a variable by means of a mouse or a graphic input apparatus. Output 115 can be reached, possibly after a prolonged waiting period, if no key has been actuated yet; the program can be terminated, for example by the user himself. If the implementation concerned the activation of a critical function, the necessary first actuation has been performed in block 100. When the second mechanical actuation is detected in the block 102, the activation becomes final. If this is done quickly, no speech output will be required: output from block 102Y. If it requires more than, for example 5 seconds, the previously described effect signalisation is output in the form of speech in the block 106.

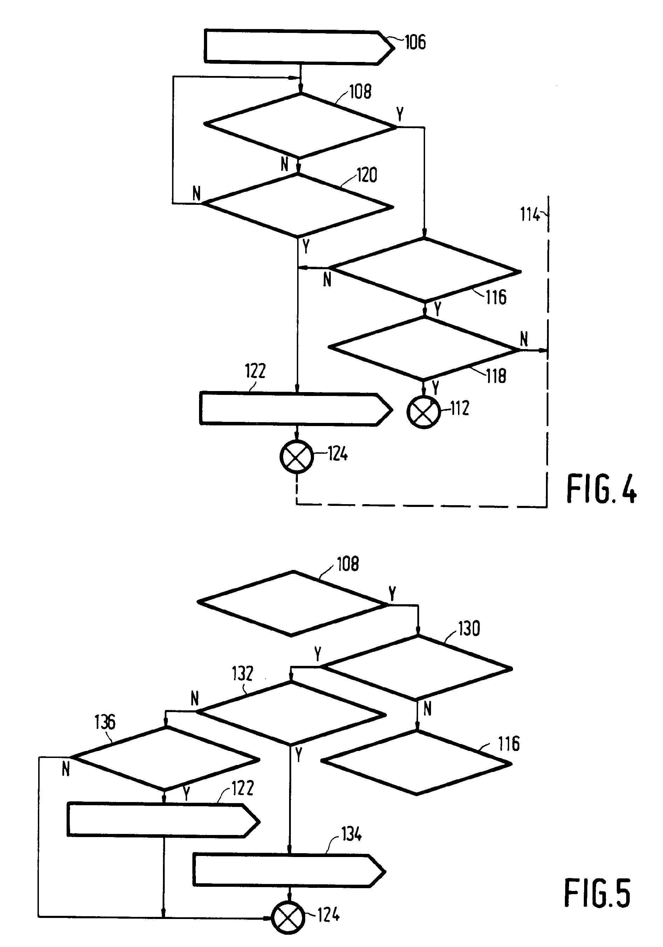

The second example is a continuation of the first example. Assume that the user understands that he still must do something but does not know what to do. If the user does nothing, after a given "time-out" the same male voice will tell how the relevant specifications must be performed, i.e. a form of active assistance. The relevant flowchart is shown in Fig. 4 which is a supplement to the flowchart shown in Fig. 3. At the output of block 108 it is detected in block 120 whether the waiting time already exceeds 10 seconds. For as long as this is not the case (N), the waiting loop consisting of the blocks 108, 120 is followed. When said 10 seconds have expired, the system proceeds to the block 122. Therein the following text is output in the male voice:
"Specify the variables (V1 and V3) as follows by means of the keyboard....". Subsequently a further waiting operation occurs in block 124, processing of the results, and possibly looping back via the line 114.

When a key actuation is signalled in block 108, it is detected in block 116 whether the operator at least makes some progress with the specification. However, when an error has occurred or when an irrelevant key has been actuated, the system directly proceeds to block 122. When progress has been made but the specification is still not ready (block 118N), the system proceeds to the block 102 in Fig. 3 via the line 114. When the specification is ready, the program is further executed in that the block 112 is reached via the output Y of the block 118. In this case block 110 is left out because of a different representation. The output from block 112, if any, back to the block 102 is not shown. The implementation of the activation of the critical function is not described in this context.

The third example is an alternative for the second example. Assume that the user does something, i.e. actuate of a HELP key; the same information as above will be issued by the system (passive help), be it possibly in legible form on the display screen because the user knows that readable information will be issued by the actuation of the HELP key or the like.

The presence of this HELP key in computer systems is well known. Realisation is possible inter alia via a separate function key, via a combination stroke (control+H) or in another way.

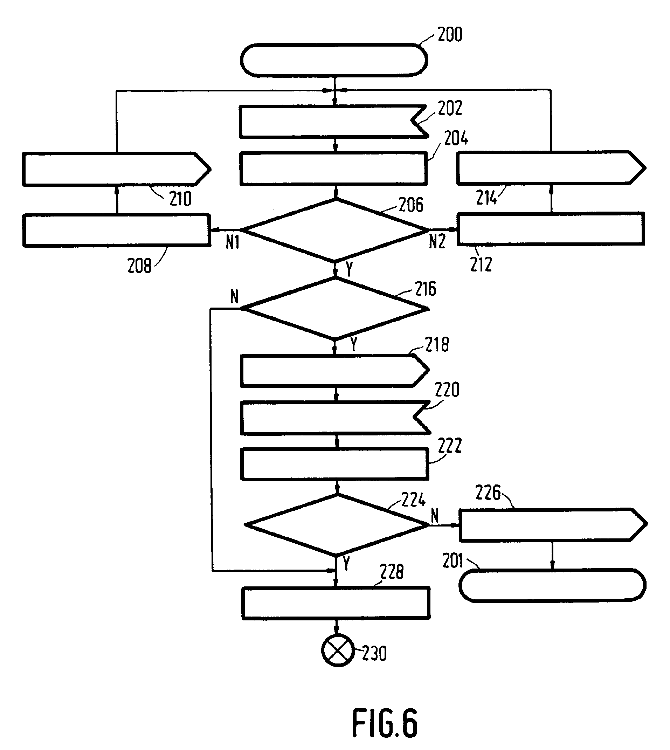

The relevant flowchart is shown in Fig. 5 which is again a supplement to the Figs. 3 and 4. The blocks 108, 116, 122 are the same as shown in Fig. 4. In block 130 it is detected whether the "HELP" key (keys) was (were) concerned. If this is not the case (N), the system proceeds to the block 116 as discussed above. In the opposite case (Y) it is detected in block 132 whether the system is in the passive visual HELP mode. It is assumed that the system has three modes which are selectable, for example prior to the execution of the program, by specification of a trivalent variable:
1. active help mode: system messages are output in an unsollicited manner, for example by means of speech;
2. passive help mode: system messages are output, for example in response to a question by way of the "HELP" key, for example by means of text on the display screen;
3. no help mode: no help is offered to an experienced user. In that case it is assumed that, for example typing errors will be always very quickly corrected.

When the system operates in the passive help mode, it proceeds from block 132 to block 134: on the screen states what the user has to do. It may also be that in addition to this directive information, or instead thereof, qualification information or effect signalling is given. This information indicates:
1. the circumstances in which a relevant user control signal may be issued,
2. the effects of the execution of the relevant user signal or the effects it may have, depending on respective further circumstances,
3. any other user control signals resembling the relevant user signal,
4. warnings (for example, as regards costs, time and other), and
5. other information.

When the system does not operate in the passive help mode (132N), in block 136 it is detected whether it operates, for example in the audio active help mode. If this is not so (N), the system proceeds to block 124. If it is so, the system proceeds to the previously described block 122. In this case the system can again provide qualification information and/or effect signalling. Therefore, a direct change-over to block 124 does not provide assistance information. An experienced user who accidentally actuates the HELP key will not experience delays because of this error.

Fig. 6 shows a fourth example in the form of a block diagram. Assume that a user issues speech commands concerning the composition and further treatment of a message to be despatched by electronic mail. "Critical" commands which cause, for example deletion or despatch of the message will be repeated, in view of (1) incorrect recognition and/or (2) a user error, in the form recognised by the system for verification, that is to say by a female voice (for the purpose of distinction from any signalling and HELP messages spoken by a male voice). In this case the system can again issue qualification information and/or effect signalling information to the user.

In block 200 the system is initialised or all operations are executed in order to bring the system in this state. In block 202 the user issues a speech command. In block 204 the operations are performed for recognising this command and for extracting the user control signal contained therein. In block 206 it is detected whether the recognition is unambiguous. If the recognition is impossible (208) or ambiguous (212), this fact (or both facts) is signalled to a user in speech (210 and 214, respectively) and the system proceeds to block 202. Notably in block 202 simple signalling can be used, for example a ringing or beeping sound.

In the case of unambiguous recognition (206Y) it is detected in block 216 whether the user control signal forms part of a critical list. In the positive case (216Y) the system requests confirmation in a female voice "You wish the ... operation to be executed?". This message can be accompanied by qualification information and/or effect signalling information. The latter can be omitted again when the system is in the previously described "no help mode". In block 220 a speech command is issued by the user for the purpose of confirmation. In block 222 recognition by the system takes place. In block 224 it is detected whether this recognition is correct, i.e. identical to the recognition in the block 206/216. If this is not so, the system requests repetition of the command in block 226 and enters the block 202 again. Block 201 indicates that the same operations have been performed as in block 200.

If no critical command is concerned (block 216N) or if the critical command has been recognised 2x (block 224Y), the command is executed in block 228. In block 230 the program module is exited. The foregoing can be extended with waiting loops, other facilities, time measurements as described with reference to the Figs. 3, 4, but these aspects have been omitted for the sake of simplicity.

In the described embodiment the speech communication channel is bidirectional and input (blocks 202, 220) as well as output (210, 214, 218, 226) are in speech. Alternatively, only the output may be in speech. In that case the blocks 212, 214 can be omitted, the recognition (blocks 204, 222) being elementary; block 208 means that an impossible or incorrect command has been given.

The same principle can also be used, for example when a data file has been called by a user in block 202. The system can then request confirmation of the access request to this particular data file, again in speech.

### List of captions:

100: start; 102: key actuated?; 104: waiting time >5 seconds?; 106: speech signalling; 108: key actuated?; 110: processing; 112: exit; 116: specification corrected?; 118: specification O.K.?; 120: waiting time >10 seconds?; 122: speech signalling 2; 130: HELP key?; 132: visual passive help mode?; 134: audio active help mode?; 134: screen signalling; 200: start; 202: speech command by user; 204: recognition by the system; 206: recognition unambiguous?; 208: recognition impossible; 210: signalling possibility (in speech); 212: recognition ambiguous; 214: signal both possibilities (in speech); 216: critical command?; 220: speech confirmation by user; 222: recognition by the system; 224: recognition correct?; 226: system requests repetition (in speech); 228: command is executed; 230: exit.

## Claims

1. A work station for use in a computer system for executing a computer program while sustaining a dialog between a user person and the program by means of a data display element (62) for outputting signals from said executing, and a mechanical input element (66) for inputting of data signals and control signals for said executing, characterized in that the work station comprises detection means fed by said input element for therefrom detecting an impending exception situation from a set of exception situations, which situation is conditional to a particular further said inputting, and an assistance mechanism fed by said detection means for thereupon presenting assistance information particular to said exception situation and said particular further inputting, said assistance mechanism feeding a speech communication channel (68, 70) for presenting said assistance information in the form of speech as a measure against screen pollution.

2. A work station as claimed in Claim 1, characterized in that said impending is represented by a provisional activating of a specific user control signal, the assistance information explaining an effect of a definitive activating of the user control signal through a subsequent mechanical actuation.

3. A work station as claimed in Claim 2, characterized in that said user control signal influences data available inside the program as regards their function outside the program.

4. A work station as claimed in Claim 2 or 3, characterized in that delay means are provided for delaying said outputting by a predetermined delay, and by forgoing said outputting under control of said further inputting having occurred before terminating said delay.

5. A work station as claimed in Claim 2, 3 or 4, characterized in that said assistance information specifies a user action.

6. A work station as claimed in any of Claims 1 to 5, characterized in that a mode control element has been provided for reversibly transferring said outputting to said display element.

7. A work station as claimed in any of Claims 1 to 6, characterized in that said speech communication channel (68, 70, 72, 74) is bidirectional in order to receive a user control signal for a program function in the form of speech, and said work station being arranged to display, in response to the recognition of a particular user control signal, qualification information of said program function on the display element (62) prior to activation of this program function in response to reception of a subsequent user control.

8. A work station as claimed in Claim 7, characterized in that the speech communication channel is arranged for recognizing said subsequent user control signal in the form of speech.

9. A work station as claimed in Claim 7 or 8, characterized in that said speech communication channel is arranged for confirming a speech recognition result to the user.

10. A work station as claimed in Claims 7, 8 or 9, characterized in that there is provided an association mechanism for presenting a series of associated qualification informations under control of a recognized calling information.

## Patentansprüche

1. Arbeitsstation zur Verwendung in einem Computersystem zum Ausführen eines Computerprogramms, wobei ein Dialog zwischen einem Benutzer und dem Programm aufrechterhalten wird, mit Hilfe eines Datendisplay-Elements (62) zum Ausgeben von Signalen aus der genannten Ausführung und eines mechanischen Eingabeelements (66) zum Eingeben von Datensignalen und Steuersignalen für die genannte Ausführung, dadurch gekennzeichnet, daß die Arbeitsstation Detektionsmittel umfaßt, die von dem genannten Eingabeelement gespeist werden, um dann aus einem Satz von Ausnahmesituationen eine bevorstehende Ausnahmesituation zu detektieren, die von einem bestimmten weiteren Eingeben abhängig ist, sowie einen von den Detektionsmitteln gespeisten Begleitmechanismus, um daraufhin für diese Ausnahmesituation und das genannte spezielle weitere Eingeben spezielle Begleitinformation anzubieten, wobei der genannte Begleitmechanismus einen Sprachkommunikationskanal (68, 70) speist, um die genannte Begleitinformation in Form von Sprache als Maßnahme gegen Überladung des Bildschirms anzubieten.

2. Arbeitsstation nach Anspruch 1, dadurch gekennzeichnet, daß die genannte bevorstehende Ausnahmesituation durch ein vorläufiges Aktivieren eines bestimmten Benutzersteuerungssignals dargestellt wird, wobei die Begleitinformation eine Auswirkung einer durch eine folgende mechanische Betätigung erfolgenden endgültigen Aktivierung des Benutzersteuerungssignals erläutert.

3. Arbeitsstation nach Anspruch 2, dadurch gekennzeichnet, daß das genannte Benutzersteuerungssignal in dem Programm vorhandene Daten beeinflußt, soweit es ihre Funktion außerhalb des Programms betrifft.

4. Arbeitsstation nach Anspruch 2 oder 3, dadurch gekennzeichnet, daß Verzögerungsmittel zum Verzögern des genannten Ausgebens um eine vorbestimmte Verzögerung vorgesehen sind, und gekennzeichnet durch Verzichten auf das genannte Ausgeben in Reaktion auf das vor Beendigung der genannten Verzögerung erfolgte, genannte weitere Eingeben.

5. Arbeitsstation nach Anspruch 2, 3 oder 4, dadurch gekennzeichnet, daß die genannte Begleitinformation eine Benutzerhandlung spezifiziert.

6. Arbeitsstation nach einem der Ansprüche 1 bis 5, dadurch gekennzeichnet, daß ein Betriebsartsteuerungselement vorgesehen ist, um das genannte Ausgeben reversibel zum genannten Display-Element zu übertragen.

7. Arbeitsstation nach einem der Ansprüche 1 bis 6, dadurch gekennzeichnet, daß der genannte Sprachkommunikationskanal (68, 70, 72, 74) bidirektional ist, um ein Benutzersteuerungssignal für eine Programmfunktion in Form von Sprache zu empfangen, und wobei die genannte Arbeitsstation eingerichtet ist, in Reaktion auf das Erkennen eines bestimmten Benutzersteuerungssignals qualifizierende Information der genannten Programmfunktion auf dem Display-Element (62) vor der Aktivierung dieser Programmfunktion in Reaktion auf den Empfang eines folgenden Benutzersteuerungssignals wiederzugeben.

8. Arbeitsstation nach Anspruch 7, dadurch gekennzeichnet, daß der Sprachkommunikationskanal zum Erkennen des genannten folgenden Benutzersteuerungssignals in Form von Sprache eingerichtet ist.

9. Arbeitsstation nach Anspruch 7 oder 8, dadurch gekennzeichnet, daß der Sprachkommunikationskanal eingerichtet ist, um dem Benutzer ein Spracherkennungsergebnis zu bestätigen.

10. Arbeitsstation nach einem der Ansprüche 7, 8 oder 9, dadurch gekennzeichnet, daß ein Assoziationsmechanismus zum Darstellen einer Reihe zugehöriger qualifizierender Informationen unter der Steuerung erkannter Rufinformation vorhanden ist.

## Revendications

1. Station de travail susceptible d'être utilisée dans un système informatique pour exécuter un programme informatique tout en entretenant un dialogue entre un utilisateur et le programme à l'aide d'un élément d'affichage de données (62) destiné à fournir des signaux de ladite exécution, et un élément d'entrée mécanique (66) pour saisir des signaux de données et des signaux de commande pour ladite exécution, caractérisée en ce que la station de travail comprend des moyens de détection alimentés par ledit élément d'entrée pour détecter une situation d'exception imminente parmi une série de situations d'exception, ladite situation étant conditionnelle à l'égard d'une autre saisie particulière, et un mécanisme d'assistance alimenté par lesdits moyens de détection pour présenter ensuite des informations d'assistance particulières à ladite situation d'exception et à ladite autre saisie particulière, ledit mécanisme d'assistance alimentant un canal de communication vocale (68, 70) pour présenter ladite information d'assistance sous la forme d'un message vocal en tant que mesure contre la pollution de l'écran.

2. Station de travail selon la revendication 1, caractérisée en ce que ladite imminence est représentée par une activation provisoire d'un signal de commande d'utilisateur spécifique, l'information d'assistance expliquant un effet d'une activation définitive du signal de commande d'utilisateur via une commande mécanique ultérieure.

3. Station de travail selon la revendication 2, caractérisée en ce que ledit signal de commande d'utilisateur influence des données disponibles à l'intérieur du programme, en ce qui concerne leur fonction en dehors du programme.

4. Station de travail selon la revendication 2 ou 3, caractérisée en ce que des moyens à retard sont prévus pour retarder ladite sortie d'un laps de temps prédéterminé et en avançant ladite sortie sous la commande de ladite autre entrée qui s'est produite avant la fin du retard.

5. Station de travail selon la revendication 2, 3 ou 4, caractérisée en ce que ladite information d'assistance spécifie une action de l'utilisateur.

6. Station de travail selon l'une quelconque des revendications 1 à 5, caractérisée en ce qu'un élément de commande de mode a été prévu pour transférer de manière réversible ladite sortie audit élément d'affichage.

7. Station de travail selon l'une quelconque des revendications 1 à 6, caractérisée en ce que ledit canal de communication vocale (68, 70, 72, 74) est bidirectionnel pour recevoir un signal de commande d'utilisateur pour une fonction de programme sous la forme d'un message vocal, ladite station de travail étant agencée pour afficher, en réaction à la reconnaissance d'un signal de commande d'utilisateur particulier, une information de qualification de ladite fonction de programme sur l'élément d'affichage (62) avant l'activation de cette fonction de programme en réaction à la réception d'une commande ultérieure de l'utilisateur.

8. Station de travail selon la revendication 7, caractérisée en ce que le canal de communication vocale est agencé pour reconnaître ledit signal de commande d'utilisateur ultérieur sous la forme d'un message vocal.

9. Station de travail selon la revendication 7 ou 8, caractérisée en ce que le canal de communication vocale est agencé pour confirmer un résultat de reconnaissance vocale à l'utilisateur.

10. Station de travail selon l'une quelconque des revendications 7, 8 ou 9, caractérisée en ce qu'il est prévu un mécanisme d'association pour présenter une série d'informations de qualification associées sous le contrôle d'une information d'appel reconnue.
